# EUROPEAN PATENT APPLICATION

(11) **EP 4 064 682 A1**
(43) Date of publication of application: **28.09.2022**
(21) Application number: 20891331.9
(22) Date of filing: 13.11.2020
(51) Int. Cl.: H04N 5/232, H04L 12/955, H04L 29/08, H04N 5/225, H04N 21/238, H04N 21/24

(54) **TRANSMISSION DEVICE, RECEPTION DEVICE, AND TRANSMISSION SYSTEM**

(30) Priority: 20.11.2019 JP 2019209579
(71) Applicant: Sony Semiconductor Solutions Corporation, Atsugi-shi, Kanagawa 243-0014 (JP)
(72) Inventor: OZAWA, Miho, Atsugi-shi, Kanagawa 243-0014 (JP)
(74) Representative: MFG Patentanwälte Meyer-Wildhagen Meggle-Freund Gerhard PartG mbB
(86) International application number: PCT/JP2020/042423
(87) International publication number: WO 2021/100627

(57) **Abstract**

A transmission device according to the present disclosure includes: a transmission unit configured to output, to a transmission channel, a plurality of packets each including a payload and a header added to the payload, the payload including pixel data corresponding to one line included in an image of one frame; and an identification information adder that adds identification information of the pixel data to at least a partial region of the payload.

## Description

### Technical Field

The present disclosure relates to a transmission device that transmits image data, a reception device that receives image data, and a transmission system that transmits and receives image data.

### Background Art

Some transmission systems transmit and receive image data that includes pixel data corresponding to a plurality of lines. PTL 1 discloses a transmission system that generates packets, and transmits and receives image data by using the packets. The packet includes a header including control information and a payload including pixel data corresponding to one line. The technique disclosed in PTL 1 enables Data ID to be added to the header, as a region to store pixel data identification information indicating a type, etc. of the transmitted and received pixel data.

### Citation List

### Patent Literature

PTL 1: Japanese Unexamined Patent Application Publication No. 2012-120158

### Summary of the Invention

If Data ID of a header is the only region to store identification information, an increase in types of pixel data can cause a region shortage, making it difficult to reliably transmit the identification information.

It is desirable to provide a transmission device, a reception device, and a transmission system that make it possible to reliably transmit identification information of pixel data.

A transmission device according to one embodiment of the present disclosure includes: a transmission unit configured to output, to a transmission channel, a plurality of packets each including a payload and a header added to the payload, the payload including pixel data corresponding to one line included in an image of one frame; and an identification information adder that adds identification information of the pixel data to at least a partial region of the payload.

A reception device according to one embodiment of the present disclosure includes a reception unit configured to receive a plurality of packets each including a payload and a header added to the payload from a transmission unit of a transmission device via a transmission channel, the payload including pixel data corresponding to one line included in an image of one frame. The reception unit is configured to receive, from the transmission device, the packet in which identification information of the pixel data has been added to at least a partial region of the payload.

A transmission system according to one embodiment of the present disclosure includes: a transmission device; and a reception device. The transmission device includes a transmission unit configured to output, to a transmission channel, a plurality of packets each including a payload and a header added to the payload, the payload including pixel data corresponding to one line included in an image of one frame, and an identification information adder that adds identification information of the pixel data to at least a partial region of the payload.

The transmission device, the reception device, or the transmission system according to one embodiment of the present disclosure makes it possible to add the identification information of the pixel data to at least the partial region of the payload.

### Brief Description of Drawings

[FIG. 1] FIG. 1 is a block diagram illustrating a first configuration example of a transmission system according to one embodiment of the present disclosure.
[FIG. 2] FIG. 2 is a block diagram illustrating a second configuration example of the transmission system according to one embodiment.
[FIG. 3] FIG. 3 is an explanatory diagram illustrating an example of a frame format in the transmission system according to one embodiment.
[FIG. 4] FIG. 4 is an explanatory diagram illustrating an example of a header structure of one packet of the frame format illustrated in FIG. 3.
[FIG. 5] FIG. 5 is an explanatory diagram illustrating an example of contents of header information in the header structure illustrated in FIG. 4.
[FIG. 6] FIG. 6 is a block diagram illustrating a configuration example of a transmission unit in the transmission system according to one embodiment.
[FIG. 7] FIG. 7 is a block diagram illustrating a configuration example of a reception unit in the transmission system according to one embodiment.
[FIG. 8] FIG. 8 is an explanatory diagram illustrating a first example of an extended storage location of Data ID.
[FIG. 9] FIG. 9 is an explanatory diagram illustrating a second example of the extended storage location of Data ID.
[FIG. 10] FIG. 10 is an explanatory diagram illustrating a configuration example of Data ID.
[FIG. 11] FIG. 11 is an explanatory diagram illustrating a first example of a data configuration example in a case where Data ID is added to Embedded Data.
[FIG. 12] FIG. 12 is an explanatory diagram illustrating a second example of the data configuration example in the case where Data ID is added to Embedded Data.
[FIG. 13] FIG. 13 is an explanatory diagram illustrating a first example of a data configuration example in a case where Data ID is added to a payload.
[FIG. 14] FIG. 14 is an explanatory diagram illustrating a second example of the data configuration example in the case where Data ID is added to the payload.
[FIG. 15] FIG. 15 is an explanatory diagram illustrating a third example of the data configuration example in the case where Data ID is added to the payload.
[FIG. 16] FIG. 16 is an explanatory diagram illustrating specific examples of identification information represented by Data ID.

### Modes for Carrying Out the Invention

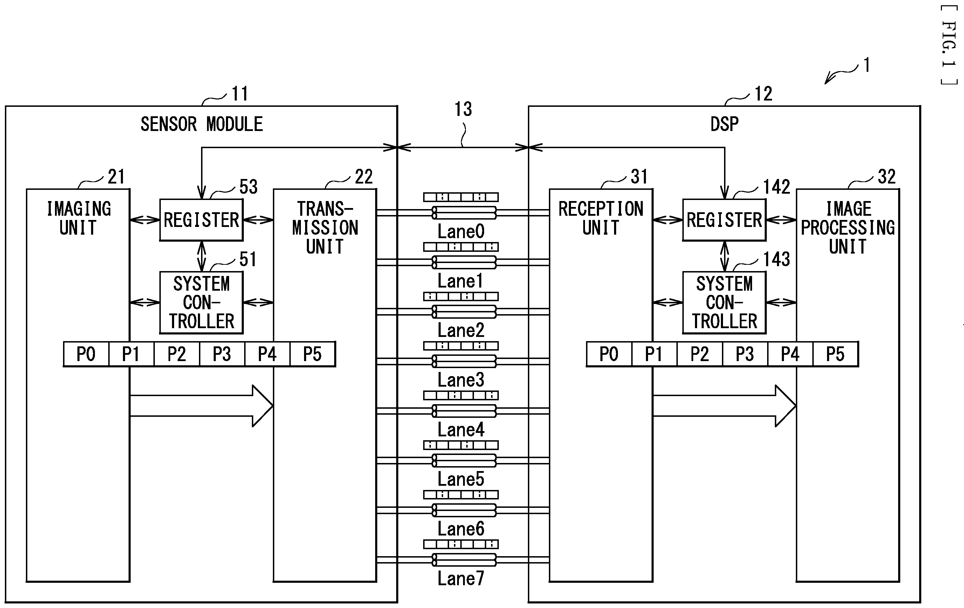

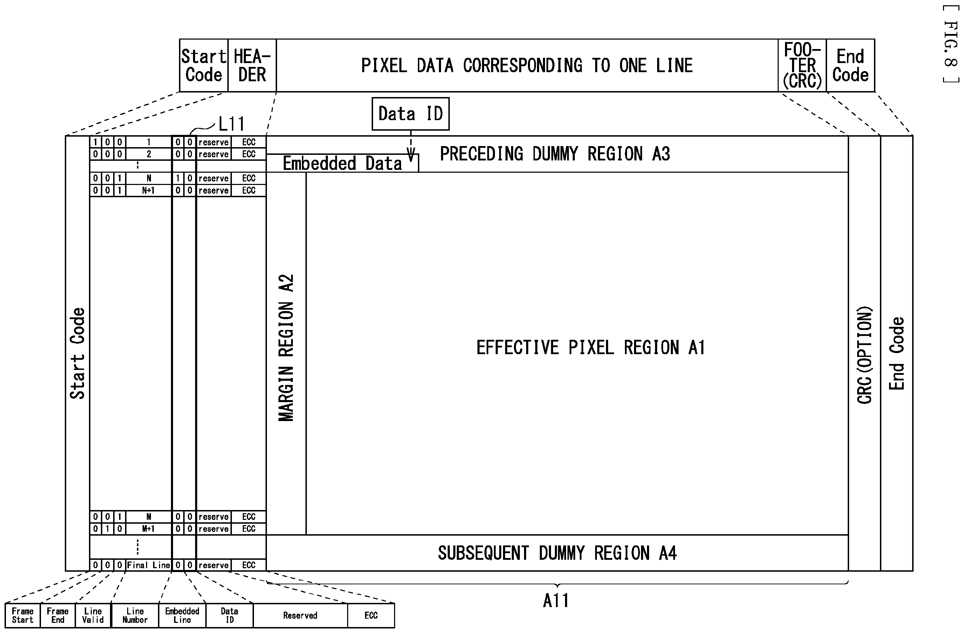

In the following, description is given of embodiments of the present disclosure in detail with reference to the drawings. It is to be noted that the description is given in the following order.
1. One Embodiment
   1.1 Configuration and Operation of Transmission System According to One Embodiment (FIG. 1 to FIG. 7)
   1.2 Improvement Example of Transmission System According to One Embodiment (FIG. 8 to FIG. 16)
   1.3 Effects
2. Other Embodiments

### <1. One Embodiment>

### [1.1 Configuration and Operation of Transmission System According to One Embodiment]

### [Configuration Example of Transmission System]

FIG. 1 illustrates a first configuration example of a transmission system 1 according to one embodiment of the present disclosure.

The transmission system 1 illustrated in FIG. 1 includes a sensor module 11 and a DSP (Digital Signal Processor) 12. The sensor module 11 and the DSP 12 include LSIs (Large Scale Integrated Circuits) different from each other, for example, and are provided in the same imaging device having an imaging function, such as a digital camera or a mobile phone.

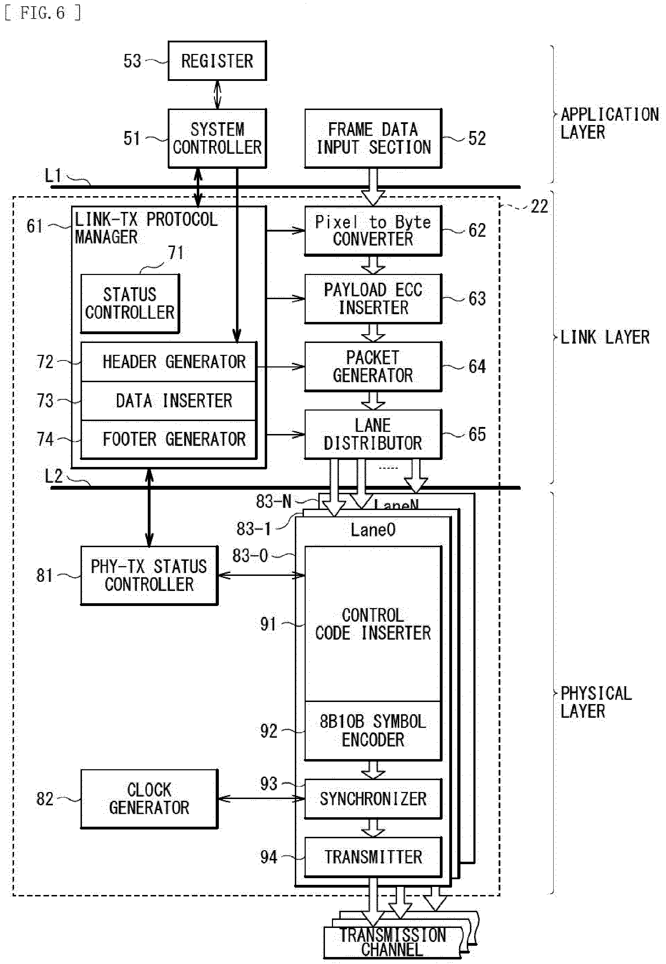

The sensor module 11 includes an imaging unit 21 and a transmission unit 22. In addition, the sensor module 11 includes a system controller 51 and a register 53. In addition, the sensor module 11 includes a frame data input section 52 to be described later (FIG. 6). The system controller 51 and the register 53 are coupled to the imaging unit 21 and the transmission unit 22.

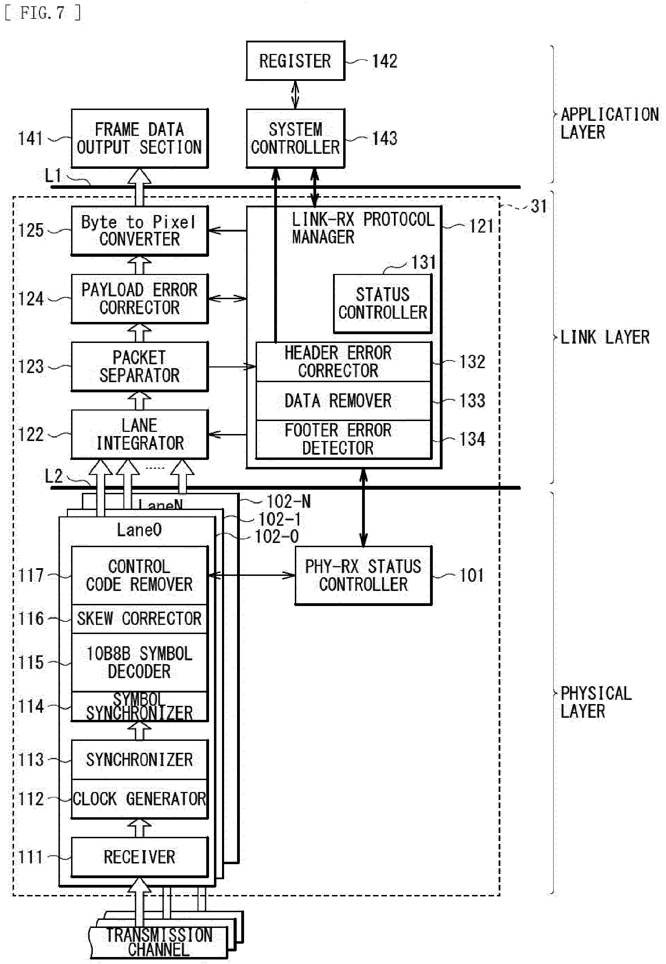

The DSP 12 includes a reception unit 31 and an image processing unit 32. In addition, the DSP 12 includes a register 142 and a system controller 143. In addition, the DSP 12 includes a frame data output section 141 to be described later (FIG. 7). The register 142 and the system controller 143 are coupled to the reception unit 31 and the image processing unit 32.

The system controller 51 and the register 53 in the sensor module 11, and the register 142 and the system controller 143 in the DSP 12 are coupled to each other by a control line 13. This enables communication of control data, etc. between the sensor module 11 and the DSP 12.

The imaging unit 21 includes an image sensor such as a CMOS (Complementary Metal Oxide Semiconductor), and performs photoelectric conversion of light received via a lens. In addition, the imaging unit 21 performs A/D conversion, etc. of signals obtained by the photoelectric conversion, and outputs pixel data included in an image of one frame to the transmission unit 22, by outputting data of each one pixel in order.

The transmission unit 22 assigns the data of each pixel supplied from the imaging unit 21 to a plurality of transmission channels, for example, in the order in which the data is supplied from the imaging unit 21. The transmission unit 22 transmits the data of each pixel to the DSP 12 in parallel via the plurality of transmission channels. In the example of FIG. 1, eight transmission channels are used to perform transmission of the pixel data. The transmission channel between the sensor module 11 and the DSP 12 may be a wired transmission channel, or may be a wireless transmission channel. Hereinafter, the transmission channel between the sensor module 11 and the DSP 12 will be referred to as a lane (Lane) as appropriate.

The reception unit 31 of the DSP 12 receives the pixel data transmitted from the transmission unit 22 via the eight lanes, and outputs the data of each pixel to the image processing unit 32 in order.

The image processing unit 32 generates an image of one frame on the basis of the pixel data supplied from the reception unit 31, and performs various kinds of image processing by using the generated image. Image data transmitted from the sensor module 11 to the DSP 12 is RAW data, and is subjected, in the image processing unit 32, to various kinds of processing, such as compression of the image data, display of the image, and recording of the image data on a recording medium.

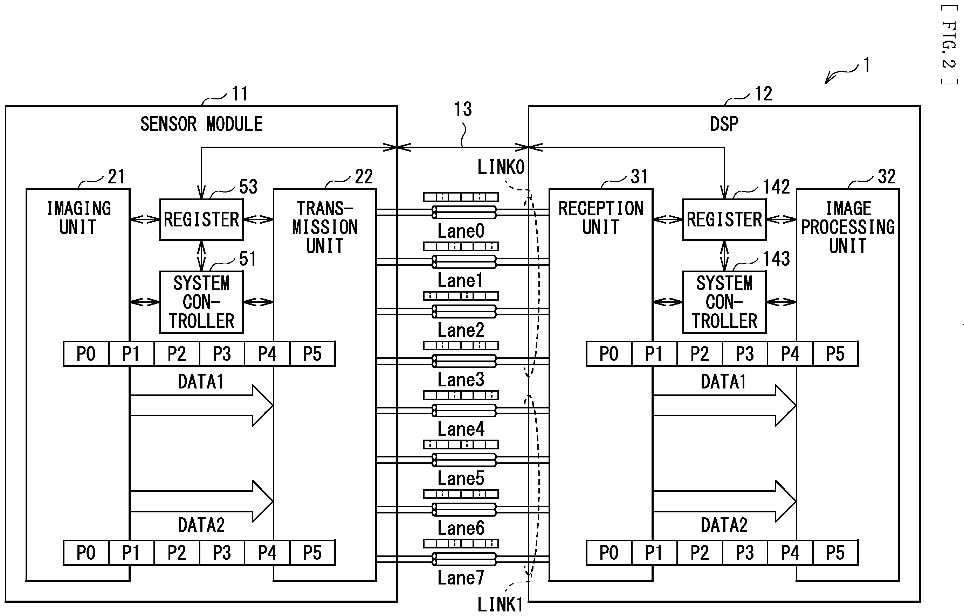

FIG. 2 illustrates a second configuration example of the transmission system 1 according to one embodiment.

The imaging unit 21 may be configured to output, for the same pixel, a plurality of pieces of pixel data of different types from each other. For example, as data of the same pixel, two pieces of pixel data of different types (first pixel data DATA1 and second pixel data DATA2) may be outputted, as illustrated in FIG. 2. For example, for the same pixel, two pieces of pixel data with different gains may be outputted. In this case, the two pieces of pixel data may be configured to be transmitted in parallel, for example, between the transmission unit 22 and the reception unit 31. For example, of Lanes 0 to 7, Lanes 0 to 3 may be configured to be assigned as a first split transmission channel (LINK0) that transmits the first pixel data DATA1, and Lanes 4 to 7 may be configured to be assigned as a second split transmission channel (LINK1) that transmits the second pixel data DATA2. In this manner, to transmit pixel data of different types in parallel, for example, between the transmission unit 22 and the reception unit 31, a configuration may be used in which a plurality of lanes are split into a plurality of split transmission channels (LINK) for the respective types of pixel data.

It is to be noted that the transmission system 1 may be provided with a plurality of transmission units 22 and a plurality of reception units 31. In this case, for example, image data of one frame or a plurality of frames captured by one imaging unit 21 may be split to be inputted to the plurality of transmission units in parallel, and the image data of the one frame or the plurality of frames inputted in parallel may be transmitted to the plurality of reception units 31 in parallel. Then, the image data of the one frame or the plurality of frames received in parallel may be outputted from the plurality of reception units 31 to the DSP 12 in parallel.

As described above, the sensor module 11 of the transmission system 1 may be provided with one or a plurality of transmission units 22 that transmits captured image data of one frame or a plurality of frames. On the other hand, the DSP 12 may be provided, in correspondence with the transmission unit 22 of the sensor module 11, with one or a plurality of reception units 31 that receives the image data of the one frame or the plurality of frames transmitted from the sensor module 11.

The following description is based on data transmission in the transmission system 1 of FIG. 1 in which the sensor module 11 is provided with one transmission unit 22 and the DSP 12 is provided with one reception unit 31. Data transmission is similarly performed also between each of the plurality of transmission units 22 and each of the plurality of reception units 31.

### [Frame Format]

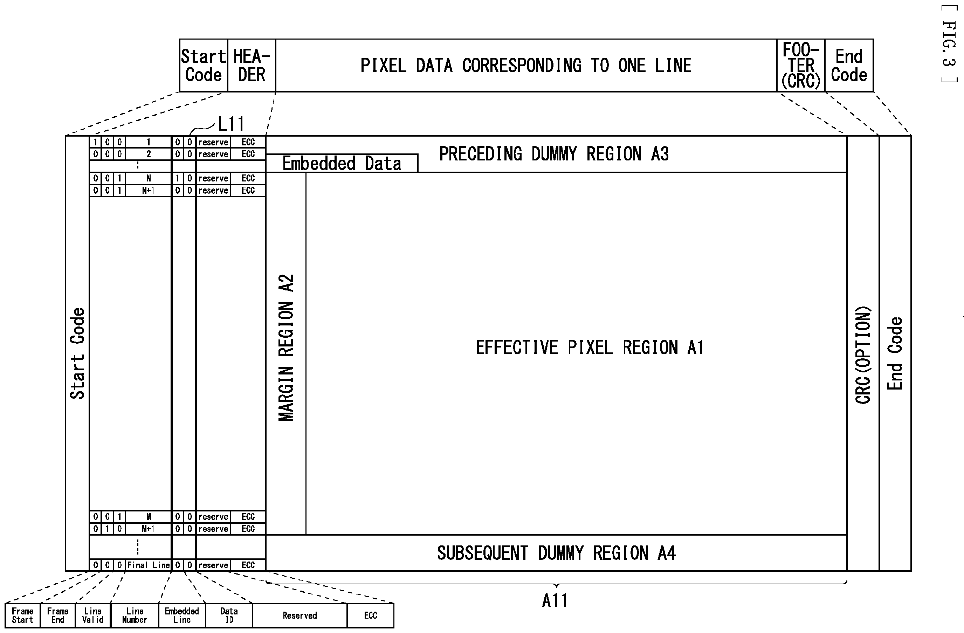

FIG. 3 illustrates an example of a frame format that is used to transmit image data of one frame between the sensor module 11 and the DSP 12.

An effective pixel region A1 is a region of effective pixels of an image of one frame captured by the imaging unit 21. On the left side of the effective pixel region A1 is set a margin region A2 in which the number of pixels in a vertical direction is the same as the number of pixels in the vertical direction of the effective pixel region A1.

On the upper side of the effective pixel region A1 is set a preceding dummy region A3 in which the number of pixels in a horizontal direction is the same as the total number of pixels in the horizontal direction of the effective pixel region A1 and the margin region A2. In the example of FIG. 3, Embedded Data is inserted in the preceding dummy region A3. Embedded Data includes information on setting values related to the imaging by the imaging unit 21, such as a shutter speed, an aperture, and a gain. Embedded Data may be inserted in a subsequent dummy region A4.

On the lower side of the effective pixel region A1 is set the subsequent dummy region A4 in which the number of pixels in the horizontal direction is the same as the total number of pixels in the horizontal direction of the effective pixel region A1 and the margin region A2.

The effective pixel region A1, the margin region A2, the preceding dummy region A3, and the subsequent dummy region A4 are included in an image data region A11.

A header is added before each line included in the image data region A11, and Start Code is added before the header. In addition, a footer is added optionally after each line included in the image data region A11, and a control code to be described later, such as End Code, is added after the footer. In a case where the footer is not added, the control code such as End Code is added after each line included in the image data region A11.

Each time an image of one frame captured by the imaging unit 21 is transmitted from the sensor module 11 to the DSP 12, the whole data of the format illustrated in FIG. 3 is transmitted as transmission data.

A strip on the upper side of FIG. 3 illustrates a structure of a packet that is used for transmission of the transmission data illustrated on the lower side. Assuming that pixels arranged in the horizontal direction are a line, a payload of the packet stores data of the pixels included in one line of the image data region A11. Transmission of the whole image data of one frame is performed by using packets whose number is equal to or greater than the number of pixels in the vertical direction of the image data region A11.

One packet is configured by adding a header and a footer to the payload where the pixel data corresponding to one line is stored. As will be described in detail later, the header includes additional information of the pixel data stored in the payload, such as Frame Start, Frame End, Line Valid, Line Number, Reserved, and ECC. In addition, the header includes Embedded Line and Data ID, as enclosed by a bold line L11. Start Code and End Code that are control codes are at least added to each packet.

In this manner, the format of transmitting, for each line, the pixel data included in the image of one frame is adopted. This makes it possible to transmit the additional information, such as the header, and the control codes, such as Start Code and End Code, during a blanking period for each line.

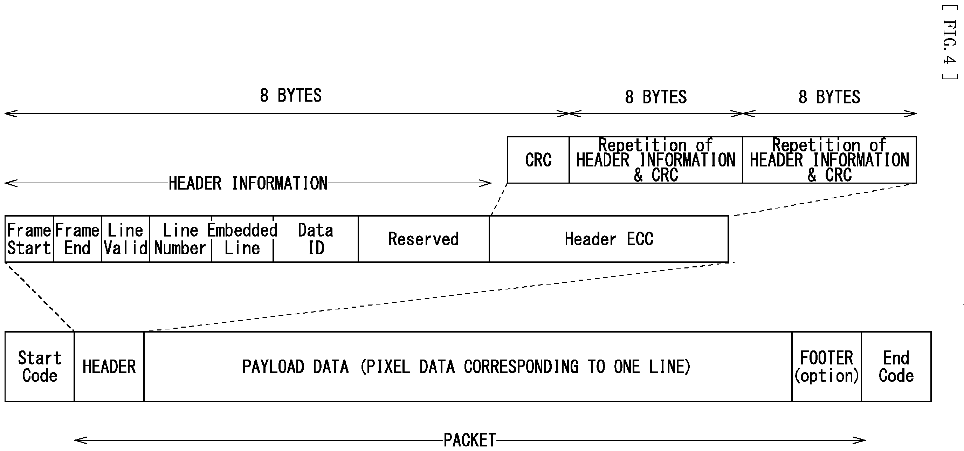

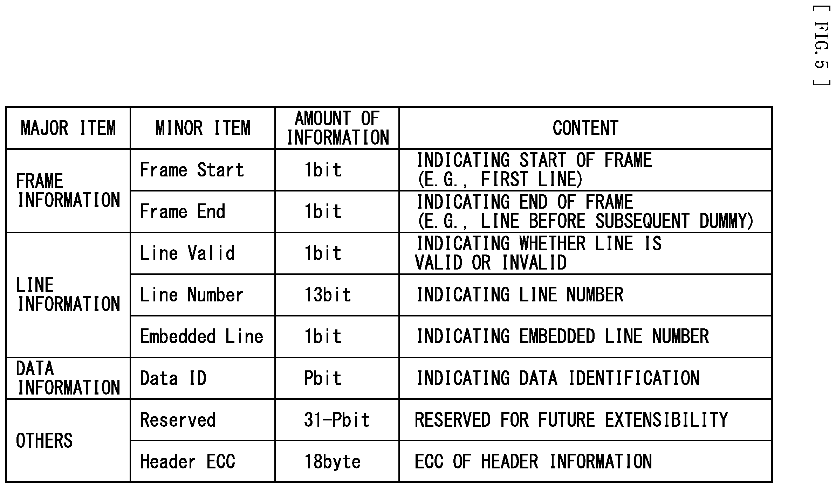

FIG. 4 illustrates an example of a header structure of one packet of the frame format illustrated in FIG. 3. FIG. 5 illustrates an example of contents of header information in the header structure illustrated in FIG. 4.

As described above, one packet includes a header and payload data that is pixel data corresponding to one line. A footer may be added to the packet. The header includes header information and Header ECC. Start Code is added at the start of each packet, and End Code is added after each packet.

The header information includes Frame Start, Frame End, Line Valid, Line Number, and Reserved. The header information further includes Embedded Line serving as line information and Data ID serving as data identification. FIG. 5 illustrates contents and amounts of information of the respective pieces of information.

Frame Start is 1-bit information indicating the start of a frame. A value of 1 is set for Frame Start of the header of the packet that is used to transmit the pixel data of the first line of the image data region A11 in FIG. 3, and a value of 0 is set for Frame Start of the header of the packet that is used to transmit the pixel data of another line.

Frame End is 1-bit information indicating the end of the frame. A value of 1 is set for Frame End of the header of the packet including the pixel data of the end line of the effective pixel region A1 in the payload, and a value of 0 is set for Frame End of the header of the packet that is used to transmit the pixel data of another line.

Frame Start and Frame End serve as frame information that is information related to the frame.

Line Valid is 1-bit information indicating whether or not the line of the pixel data stored in the payload is a line of effective pixels. A value of 1 is set for Line Valid of the header of the packet that is used to transmit the pixel data of a line in the effective pixel region A1, and a value of 0 is set for Line Valid of the header of the packet that is used to transmit the pixel data of another line.

Line Number is 13-bit information indicating a line number of the line including the pixel data stored in the payload.

Line Valid and Line Number serve as line information that is information related to the line.

Embedded Line is 1-bit information indicating whether or not the packet is a packet that is used to transmit the line including Embedded Data inserted. For example, a value of 1 is set for Embedded Line of the header of the packet that is used to transmit the line including Embedded Data, and a value of 0 is set for Embedded Line of the header of the packet that is used to transmit another line. As described above, information on setting values related to the imaging is inserted, as Embedded Data, in a predetermined line of the preceding dummy region A3 or the subsequent dummy region A4.

Data ID is P-bit information indicating a number of the pixel data stored in the payload. P bits represent a predetermined number of bits equal to or greater than 1 bit.

Reserved is a region of 31-P bits for extension. An amount of data of the whole header information is 6 bytes.

As illustrated in FIG. 4, Header ECC disposed subsequent to the header information includes a CRC (Cyclic Redundancy Check) code that is a 2-byte error detection code calculated on the basis of the 6-byte header information. In addition, Header ECC includes, subsequent to the CRC code, two pieces of the same information as 8-byte information that is a set of the header information and the CRC code.

That is, the header of one packet includes three same sets of the header information and the CRC code. The amount of data of the whole header is 8 bytes of a first set of the header information and the CRC code, 8 bytes of a second set of the header information and the CRC code, and 8 bytes of a third set of the header information and the CRC code, i.e., 24 bytes in total.

### [Configuration of Transmission unit 22 and Reception unit 31]

FIG. 6 illustrates a configuration example of the transmission unit 22 in the transmission system 1. FIG. 7 illustrates a configuration example of the reception unit 31 in the transmission system 1.

The transmission unit 22 and the reception unit 31 each include a configuration of a link layer and a configuration of a physical layer. In FIG. 6 and FIG. 7, a configuration illustrated above a solid line L2 is the configuration of the link layer, and a configuration illustrated below the solid line L2 is the configuration of the physical layer.

It is to be noted that a configuration illustrated above a solid line L1 is a configuration of an application layer. The application layer includes the system controller 51, the frame data input section 52, and the register 53, and includes the frame data output section 141, the register 142, and the system controller 143. The frame data input section 52 is provided in the imaging unit 21, for example. The frame data output section 141 is provided in the image processing unit 32, for example.

The system controller 51 communicates with a LINK-TX protocol manager 61 of the transmission unit 22, and controls transmission of image data by, for example, providing information related to the frame format.

The frame data input section 52 performs imaging in response to a user's instruction, etc., and supplies data of each pixel included in an image obtained by performing the imaging to a Pixel to Byte converter 62 of the transmission unit 22.

The register 53 stores information such as the number of bits of Pixel to Byte conversion and the number of Lanes. Image data transmission processing is performed in accordance with the information stored in the register 53.

The frame data output section 141 generates an image of one frame on the basis of the pixel data of each line supplied from the reception unit 31, and outputs the image. Various kinds of processing is performed by using the image outputted from the frame data output section 141.

The register 142 stores various kinds of setting values related to reception of image data, such as the number of bits of Byte to Pixel conversion and the number of Lanes. Image data reception processing is performed in accordance with the information stored in the register 142.

The system controller 143 communicates with a LINK-RX protocol manager 121, and controls a sequence of a mode change, etc.

### [Configuration of Link Layer of Transmission unit 22]

As illustrated in FIG. 6, the transmission unit 22 is provided with, as the configuration of the link layer, the LINK-TX protocol manager 61, the Pixel to Byte converter 62, a payload ECC inserter 63, a packet generator 64, and a lane distributor 65. The LINK-TX protocol manager 61 includes a status controller 71, a header generator 72, a data inserter 73, and a footer generator 74.

The status controller 71 of the LINK-TX protocol manager 61 manages a status of the link layer of the transmission unit 22.

The header generator 72 generates a header to be added to a payload where pixel data corresponding to one line is stored, and outputs the header to the packet generator 64. An example of the header is illustrated in FIG. 4.

The header generator 72 generates header information under the control of the system controller 51. For example, from the system controller 51, information indicating the line number of pixel data that is outputted by the frame data input section 52, and information indicating the start and the end of a frame are supplied to the header generator 72.

In addition, the header generator 72 calculates a CRC code by applying the header information to a generating polynomial. The generating polynomial of the CRC code to be added to the header information is represented by, for example, the following expression (1):

CRC16 = X¹⁶ + X¹⁵ + X² + 1 ...... (1)

The header generator 72 generates a set of the header information and the CRC code by adding the CRC code to the header information, and generates the header by repeatedly disposing three same sets of the header information and the CRC code. The header generator 72 outputs the generated header to the packet generator 64.

The data inserter 73 generates data to be used for stuffing (stuffing), and outputs the data to the Pixel to Byte converter 62 and the lane distributor 65. Payload stuffing data that is the stuffing data supplied to the Pixel to Byte converter 62 is added to pixel data subjected to the Pixel to Byte conversion, and is used to adjust an amount of data of pixel data to be stored in the payload. In addition, lane stuffing data that is the stuffing data supplied to the lane distributor 65 is added to data subjected to lane assignment, and is used to adjust an amount of data between the lanes.

The footer generator 74 calculates, as appropriate, a 32-bit CRC code by applying payload data to a generating polynomial, under the control of the system controller 51, and outputs the CRC code determined by the calculation to the packet generator 64 as a footer. The generating polynomial of the CRC code to be added as the footer is represented by, for example, the following expression (2):

CRC32 = X³² + X³¹ + X⁴ + X³ + X + 1 ...... (2)

The Pixel to Byte converter 62 acquires the pixel data supplied from the frame data input section 52, and performs the Pixel to Byte conversion of converting the data of each pixel into data in 1-byte units. For example, a pixel value (RGB) of each pixel of an image captured by the imaging unit 21 is represented by any number of bits out of 8 bits, 10 bits, 12 bits, 14 bits, and 16 bits.

The Pixel to Byte converter 62 performs the Pixel to Byte conversion for each pixel, for example, in order from the pixel at the left end of a line. In addition, the Pixel to Byte converter 62 generates payload data by adding the payload stuffing data supplied from the data inserter 73 to the pixel data in byte units obtained by the Pixel to Byte conversion, and outputs the payload data to the payload ECC inserter 63.

The pixel data subjected to the Pixel to Byte conversion is grouped into a predetermined number of groups, in the order in which the pixel data is obtained by the conversion. In the link layer of the transmission unit 22, after the grouping is performed in this manner, processing is performed in parallel for the pixel data at the same position in each group, for each period defined by a clock signal. For example, in a case where the pixel data is assigned to 16 groups, the processing of the pixel data is carried out by processing 16 pieces of pixel data arranged in each line within the same period.

As described above, the payload of one packet includes pixel data of one line. Although the processing of the pixel data of the effective pixel region A1 in FIG. 3 is described here, the pixel data of another region, such as the margin region A2, is also processed together with the pixel data of the effective pixel region A1.

After the pixel data corresponding to one line is grouped, the payload stuffing data is added to make each group have the same data length. The payload stuffing data is 1-byte data.

The payload data having such a configuration is supplied from the Pixel to Byte converter 62 to the payload ECC inserter 63.

The payload ECC inserter 63 calculates an error correction code to be used for error correction of the payload data, on the basis of the payload data supplied from the Pixel to Byte converter 62, and inserts a parity that is the error correction code determined by the calculation into the payload data. For example, a Reed-Solomon code is used as the error correction code. It is to be noted that the insertion of the error correction code is optional. For example, it is possible to perform only either one of the insertion of the parity by the payload ECC inserter 63 and the addition of the footer by the footer generator 74.

In the payload ECC inserter 63, basically, a 2-byte parity is generated on the basis of 224 pieces of pixel data, for example, and is inserted subsequent to the 224 pieces of pixel data.

The payload ECC inserter 63 outputs the payload data into which the parity has been inserted to the packet generator 64. In a case where the insertion of the parity is not performed, the payload data supplied from the Pixel to Byte converter 62 to the payload ECC inserter 63 is outputted to the packet generator 64 as it is.

The packet generator 64 generates a packet, by adding the header generated by the header generator 72 to the payload data supplied from the payload ECC inserter 63. In a case where the footer has been generated by the footer generator 74, the packet generator 64 also adds the footer to the payload data.

The packet generator 64 outputs packet data that is data included in the generated one packet to the lane distributor 65. The lane distributor 65 is supplied with: the packet data including the header data and the payload data; the packet data including the header data, the payload data, and the footer data; or the packet data including the header data and the payload data into which the parity has been inserted. The packet structure in FIG. 4 is a logical structure, and in the link layer and the physical layer, data of the packet having the structure in FIG. 4 is processed in units of bytes.

The lane distributor 65 assigns the packet data supplied from the packet generator 64 to each lane to be used for data transmission, out of Lanes 0 to 7, in order from the data at the start.

The lane distributor 65 outputs the packet data assigned to each lane to the physical layer. Although a case of transmitting the data by using the eight lanes of Lanes 0 to 7 is mainly described below, similar processing is performed even in a case where the number of lanes to be used for the data transmission is another number.

### [Configuration of Physical Layer of Transmission unit 22]

As illustrated in FIG. 6, the transmission unit 22 is provided with, as the configuration of the physical layer, a PHY-TX status controller 81, a clock generator 82, and signal processors 83-0 to 83-N. The signal processor 83-0 includes a control code inserter 91, an 8B10B symbol encoder 92, a synchronizer 93, and a transmitter 94. Of the packet data outputted from the lane distributor 65, the packet data assigned to Lane 0 is inputted to the signal processor 83-0, and the packet data assigned to Lane 1 is inputted to the signal processor 83-1. In addition, the packet data assigned to Lane N is inputted to the signal processor 83-N.

In this manner, the physical layer of the transmission unit 22 is provided with the same number of signal processors 83-0 to 83-N as the number of lanes, and processing of the packet data to be transmitted by using each lane is performed in parallel in each of the signal processors 83-0 to 83-N. Although the configuration of the signal processor 83-0 is described, the signal processors 83-1 to 83-N also have a similar configuration.

The PHY-TX status controller 81 controls each unit of the signal processors 83-0 to 83-N. For example, a timing of each processing to be performed by the signal processors 83-0 to 83-N is controlled by the PHY-TX status controller 81.

The clock generator 82 generates a clock signal, and outputs the clock signal to the synchronizer 93 of each of the signal processors 83-0 to 83-N.

The control code inserter 91 of the signal processor 83-0 adds control codes to the packet data supplied from the lane distributor 65. The control code is a code represented by one symbol selected from among a plurality of types of symbols prepared in advance, or by a combination of the plurality of types of symbols. Each symbol inserted by the control code inserter 91 is 8-bit data. By being subjected to 8B10B conversion in a circuit in a subsequent stage, one symbol inserted by the control code inserter 91 becomes 10-bit data. On the other hand, received data is subjected to 10B8B conversion in the reception unit 31 as will be described later; each symbol before the 10B8B conversion included in the received data is 10-bit data, and each symbol after the 10B8B conversion becomes 8-bit data.

The control codes include Start Code, End Code, and the like illustrated in FIG. 4. In addition, the control codes include Idle Code, Pad Code, Sync Code, Deskew Code, and Standby Code.

The control code inserter 91 outputs the packet data to which the control codes have been added to the 8B10B symbol encoder 92.

The 8B10B symbol encoder 92 performs the 8B10B conversion on the packet data supplied from the control code inserter 91 (the packet data to which the control codes have been added), and outputs the packet data converted into data in 10-bit units to the synchronizer 93.

The synchronizer 93 outputs each bit of the packet data supplied from the 8B10B symbol encoder 92 to the transmitter 94 in accordance with the clock signal generated by the clock generator 82.

The transmitter 94 transmits the packet data supplied from the synchronizer 93 to the reception unit 31, via the transmission channel included in Lane 0. In a case where the data transmission is performed by using the eight lanes, the packet data is transmitted to the reception unit 31 by using also the transmission channels included in Lanes 1 to 7.

### [Configuration of Physical Layer of Reception unit 31]

As illustrated in FIG. 7, the reception unit 31 is provided with, as the configuration of the physical layer, a PHY-RX status controller 101 and signal processors 102-0 to 102-N. The signal processor 102-0 includes a receiver 111, a clock generator 112, a synchronizer 113, a symbol synchronizer 114, a 10B8B symbol decoder 115, a skew corrector 116, and a control code remover 117. The packet data transmitted via the transmission channel included in Lane 0 is inputted to the signal processor 102-0, and the packet data transmitted via the transmission channel included in Lane 1 is inputted to the signal processor 102-1. In addition, the packet data transmitted via the transmission channel included in Lane N is inputted to the signal processor 102-N.

In this manner, the physical layer of the reception unit 31 is provided with the same number of signal processors 102-0 to 102-N as the number of lanes, and processing of the packet data transmitted by using each lane is performed in parallel in each of the signal processors 102-0 to 102-N. Although the configuration of the signal processor 102-0 is described, the signal processors 102-1 to 102-N also have a similar configuration.

The receiver 111 receives a signal representing the packet data transmitted from the transmission unit 22 via the transmission channel included in Lane 0, and outputs the signal to the clock generator 112.

The clock generator 112 achieves bit synchronization by detecting an edge of the signal supplied from the receiver 111, and generates a clock signal on the basis of the edge detection cycle. The clock generator 112 outputs the signal supplied from the receiver 111 to the synchronizer 113 together with the clock signal.

The synchronizer 113 performs sampling of the signal received by the receiver 111, in accordance with the clock signal generated by the clock generator 112, and outputs the packet data obtained by the sampling to the symbol synchronizer 114. The clock generator 112 and the synchronizer 113 implement a CDR (Clock Data Recovery) function.

The symbol synchronizer 114 achieves symbol synchronization by detecting control codes included in the packet data, or by detecting a part of symbols included in the control codes. For example, the symbol synchronizer 114 detects a K28.5 symbol included in Start Code, End Code, and Deskew Code to achieve the symbol synchronization. The symbol synchronizer 114 outputs packet data in 10-bit units representing each symbol to the 10B8B symbol decoder 115.

In addition, the symbol synchronizer 114 achieves the symbol synchronization by detecting a symbol boundary included in Sync Code that is repeatedly transmitted from the transmission unit 22 during a training mode before start of transmission of the packet data.

The 10B8B symbol decoder 115 performs the 10B8B conversion on the packet data in 10-bit units supplied from the symbol synchronizer 114, and outputs the packet data converted into data in 8-bit units to the skew corrector 116.

The skew corrector 116 detects Deskew Code from the packet data supplied from the 10B8B symbol decoder 115. Information on a detection timing of Deskew Code by the skew corrector 116 is supplied to the PHY-RX status controller 101.

In addition, the skew corrector 116 corrects Data Skew between the lanes, by matching the timing of Deskew Code with a timing indicated by information supplied from the PHY-RX status controller 101. The information supplied from the PHY-RX status controller 101 indicates the latest timing of the timings of Deskew Code detected in each of the signal processors 102-0 to 102-N.

The skew corrector 116 outputs the packet data whose Data Skew has been corrected to the control code remover 117.

The control code remover 117 removes the control codes added to the packet data, and outputs data from Start Code to End Code to the link layer as packet data.

The PHY-RX status controller 101 controls each unit of the signal processors 102-0 to 102-N, and causes each unit to perform correction of Data Skew between the lanes, etc. In addition, in a case where a transmission error occurs on a predetermined lane and a control code is lost, the PHY-RX status controller 101 performs error correction of the control code, by adding a control code transmitted via another lane in place of the lost control code.

### [Configuration of Link Layer of Reception unit 31]

As illustrated in FIG. 7, the reception unit 31 is provided with, as the configuration of the link layer, the LINK-RX protocol manager 121, a lane integrator 122, a packet separator 123, a payload error corrector 124, and a Byte to Pixel converter 125. The LINK-RX protocol manager 121 includes a status controller 131, a header error corrector 132, a data remover 133, and a footer error detector 134.

The lane integrator 122 integrates the packet data supplied from the signal processors 102-0 to 102-N of the physical layer, by rearranging the packet data in an order opposite to the order of distribution to each lane by the lane distributor 65 of the transmission unit 22.

When the packet data of each lane is integrated, lane stuffing data is removed by the lane integrator 122 under the control of the data remover 133. The lane integrator 122 outputs the integrated packet data to the packet separator 123.

The packet separator 123 separates the packet data corresponding to one packet integrated by the lane integrator 122 into packet data included in header data and packet data included in payload data. The packet separator 123 outputs the header data to the header error corrector 132, and outputs the payload data to the payload error corrector 124.

In addition, in a case where the packet includes a footer, the packet separator 123 separates the data corresponding to one packet into packet data included in header data, packet data included in payload data, and packet data included in footer data. The packet separator 123 outputs the header data to the header error corrector 132, and outputs the payload data to the payload error corrector 124. In addition, the packet separator 123 outputs the footer data to the footer error detector 134.

In a case where a parity is inserted in the payload data supplied from the packet separator 123, the payload error corrector 124 detects an error in the payload data by performing error correction calculation on the basis of the parity, and performs correction of the detected error.

The payload error corrector 124 outputs, to the Byte to Pixel converter 125, pixel data subjected to the error correction obtained by performing the error correction for each of Basic Blocks and Extra Blocks. In a case where the parity is not inserted in the payload data supplied from the packet separator 123, the payload data supplied from the packet separator 123 is outputted to the Byte to Pixel converter 125 as it is.

The Byte to Pixel converter 125 removes payload stuffing data included in the payload data supplied from the payload error corrector 124, under the control of the data remover 133.

In addition, the Byte to Pixel converter 125 performs the Byte to Pixel conversion of converting the data of each pixel in byte units obtained by removing the payload stuffing data into pixel data in units of 8 bits, 10 bits, 12 bits, 14 bits, or 16 bits. The conversion performed in the Byte to Pixel converter 125 is inverse to the Pixel to Byte conversion by the Pixel to Byte converter 62 of the transmission unit 22.

The Byte to Pixel converter 125 outputs the pixel data in units of 8 bits, 10 bits, 12 bits, 14 bits, or 16 bits obtained by the Byte to Pixel conversion to the frame data output section 141. In the frame data output section 141, for example, each line of effective pixels identified by Line Valid of header information is generated on the basis of the pixel data obtained by the Byte to Pixel converter 125, and an image of one frame is generated by each line being arranged in accordance with Line Number of the header information.

The status controller 131 of the LINK-RX protocol manager 121 manages a status of the link layer of the reception unit 31.

The header error corrector 132 acquires three sets of header information and a CRC code on the basis of the header data supplied from the packet separator 123. The header error corrector 132 performs, for each set of the header information and the CRC code, error detection calculation that is calculation for detection of an error in the header information, by using the CRC code of the same set as the header information.

In addition, the header error corrector 132 estimates correct header information on the basis of at least either of an error detection result of the header information of each set, and a comparison result of data determined by the error detection calculation, and outputs the header information estimated to be correct and a decoding result. The data determined by the error detection calculation is a value determined by applying the CRC generating polynomial to the header information. In addition, the decoding result is information indicating successful decoding or unsuccessful decoding.

Assume that the respective three sets of the header information and the CRC code are a set 1, a set 2, and a set 3. In this case, the header error corrector 132 acquires, by the error detection calculation for the set 1, whether or not the header information of the set 1 includes an error (the error detection result) and data 1 that is the data determined by the error detection calculation. In addition, the header error corrector 132 acquires, by the error detection calculation for the set 2, whether or not the header information of the set 2 includes an error and data 2 that is the data determined by the error detection calculation. The header error corrector 132 acquires, by the error detection calculation for the set 3, whether or not the header information of the set 3 includes an error and data 3 that is the data determined by the error detection calculation.

In addition, the header error corrector 132 determines each of whether or not the data 1 and the data 2 match, whether or not the data 2 and the data 3 match, and whether or not the data 3 and the data 1 match.

For example, in a case where no error is detected by all the error detection calculation for the set 1, the set 2, and the set 3, and all the comparison results of the data determined by the error detection calculation match, the header error corrector 132 selects information indicating successful decoding as the decoding result. In addition, the header error corrector 132 estimates that all the pieces of header information are correct, and selects any of the header information of the set 1, the header information of the set 2, and the header information of the set 3 as output information.

On the other hand, in a case where no error is detected by only the error detection calculation for the set 1, the header error corrector 132 selects information indicating successful decoding as the decoding result. In addition, the header error corrector 132 estimates that the header information of the set 1 is correct, and selects the header information of the set 1 as the output information.

In addition, in a case where no error is detected by only the error detection calculation for the set 2, the header error corrector 132 selects information indicating successful decoding as the decoding result. In addition, the header error corrector 132 estimates that the header information of the set 2 is correct, and selects the header information of the set 2 as the output information.

In a case where no error is detected by only the error detection calculation for the set 3, the header error corrector 132 selects information indicating successful decoding as the decoding result. In addition, the header error corrector 132 estimates that the header information of the set 3 is correct, and selects the header information of the set 3 as the output information.

The header error corrector 132 outputs the decoding result and the output information selected in the above manner to the register 142, and causes the register 142 to store the decoding result and the output information. In this manner, the header information error correction by the header error corrector 132 is performed by detecting header information without an error from among a plurality of pieces of header information by using the CRC code, and outputting the detected header information.

The data remover 133 controls the lane integrator 122 to remove the lane stuffing data, and controls the Byte to Pixel converter 125 to remove the payload stuffing data.

The footer error detector 134 acquires a CRC code stored in the footer, on the basis of the footer data supplied from the packet separator 123. The footer error detector 134 performs error detection calculation by using the acquired CRC code to detect an error in the payload data. The footer error detector 134 outputs an error detection result, and causes the register 142 to store the error detection result.

### [Overview of Operation of Sensor Module 11 and DSP 12]

Next, an overview of operation of the sensor module 11 and the DSP 12 is described. Operation of the imaging device including the transmission system 1 is described as an example.

The imaging unit 21 of the sensor module 11 performs imaging in a case where an instruction for start of imaging is given by, for example, a shutter button provided in the imaging device being pressed. The frame data input section 52 of the imaging unit 21 (FIG. 6) outputs pixel data included in an image of one frame obtained by the imaging to the transmission unit 22, by outputting data of each one pixel in order.

By the data transmission processing by the transmission unit 22, a packet including a payload where pixel data corresponding to one line is stored is generated, and packet data included in the packet is transmitted to the reception unit 31.

The reception unit 31 performs the data reception processing. By the data reception processing, the packet data transmitted from the transmission unit 22 is received, and the pixel data stored in the payload is outputted to the image processing unit 32.

The data transmission processing performed by the transmission unit 22 and the data reception processing performed by the reception unit 31 are alternately performed for pixel data corresponding to one line. That is, if pixel data of a given one line is transmitted by the data transmission processing, the data reception processing is performed. If pixel data of one line is received by the data reception processing, the data transmission processing is performed for pixel data of the next one line. The data transmission processing by the transmission unit 22 and the data reception processing by the reception unit 31 may be performed temporally in parallel, as appropriate.

In a case where the transmission and reception of the pixel data of all the lines included in the image of one frame ends, the frame data output section 141 of the image processing unit 32 generates the image of one frame on the basis of the pixel data supplied from the reception unit 31.

### [1.3 Improvement Example of Transmission System 1 According to One Embodiment]

As described with reference to FIG. 4 and FIG. 5, in the transmission system 1 according to one embodiment, the header includes a region called Data ID, and it is possible to add identification information, such as a type of pixel data, by using Data ID. On the other hand, the types of pixel data are increasing in recent years, and if the increase continues, there is a possibility that Data ID does not fit into the header region. The identification information includes a ROI (Region of Interest), a type of a transmission channel that transmits pixel data (LINK), etc.

In the transmission system 1 according to one embodiment, it is possible to enlarge a region to store Data ID to some extent by using a Reserved region of the header. Because the types of pixel data, etc. are increasing in recent years, there is a possibility that the identification information does not fit into only the header region, including the Reserved region.

Hence, as an improvement example of the transmission system 1 according to one embodiment, described below is a technology of enlarging the region to store identification information of pixel data, making it possible to reliably transmit the identification information.

FIG. 8 illustrates a first example of an extended storage location of Data ID.

As illustrated in FIG. 8, Data ID may be added to an Embedded Data region, for example. It is to be noted that, although FIG. 8 illustrates an example in which the preceding dummy region A3 includes the Embedded Data region, the Embedded Data region may be inserted in the subsequent dummy region A4. In this case, to Embedded Data, data indicating identification information corresponding to a plurality of lines may be added as Data ID. In this case, the packet generator 64 generates, for example, a packet in which Data ID is added to the Embedded Data region.

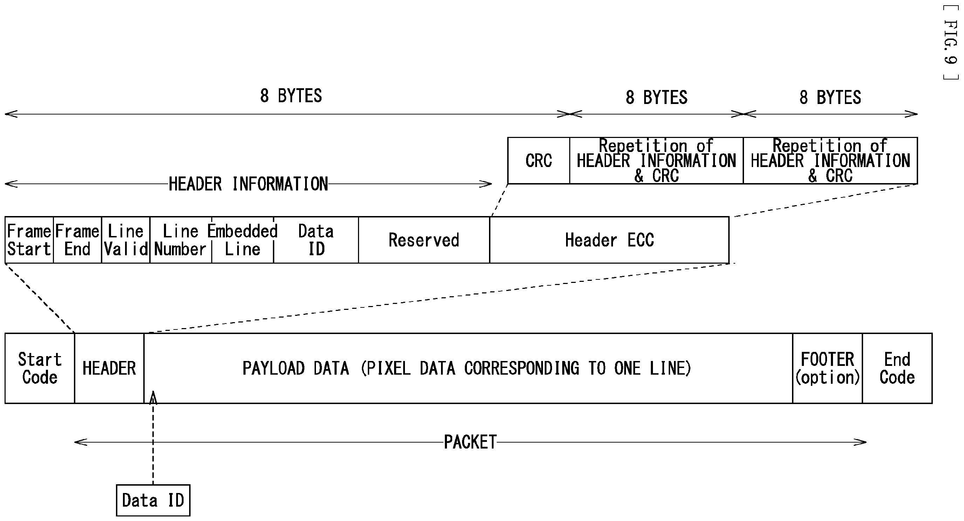

FIG. 9 illustrates a second example of the extended storage location of Data ID.

As illustrated in FIG. 9, Data ID may be added to a partial region of a payload including pixel data, for example. In this case, to the payload, data indicating identification information corresponding to one line may be added as Data ID. In this case, the packet generator 64 generates, for example, a packet in which Data ID is added to the partial region of the payload including the pixel data.

It is to be noted that, in a case of extending the storage location of Data ID, it is possible to use, in combination, a normal Data ID region included in the header. In addition, in extending the storage location of Data ID, the Reserved region in the header may be used as a region indicating the extended storage location of Data ID, etc.

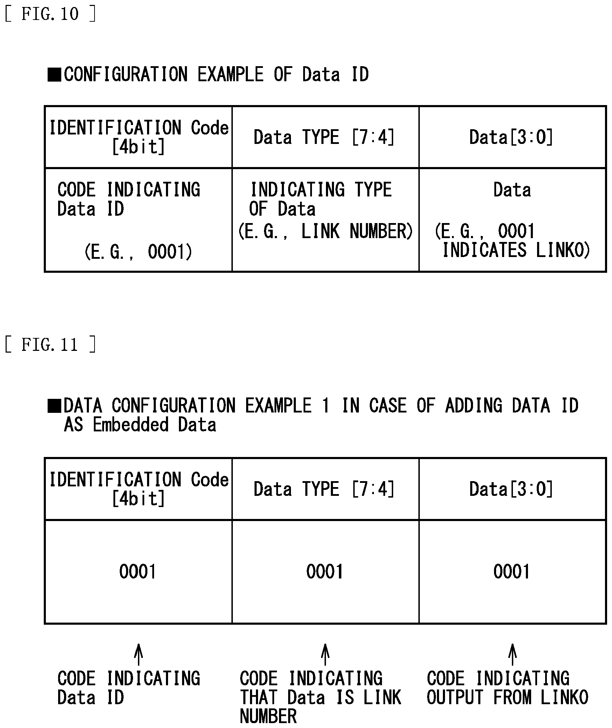

FIG. 10 illustrates a configuration example of Data ID.

Data ID includes, for example, an identification Code, a Data type, and Data. The identification Code includes 4 bits to have extensibility, in consideration that data other than Data ID may be added. Data ID is a code indicating Data ID, and is a value such as "0001", for example. The Data type indicates the Data type of Data ID. The Data type indicates, for example, a LINK number, etc. Data indicates Data of Data ID. Data indicates LINK0, etc. if the value is "0001", for example.

FIG. 11 to FIG. 12 illustrate a data configuration example in a case of adding Data ID to the Embedded Data region.

FIG. 11 illustrates a first example of the data configuration example in the case where Data ID is added to Embedded Data.

FIG. 11 illustrates a configuration example of Data ID, for example, in a case of assigning respective two types of pixel data to LINK0 and LINK1. In the example of FIG. 11, the value of the identification Code is "0001", indicating Data ID. In addition, the value of the Data type is "0001", indicating that Data is the LINK number. In addition, the value of Data is "0001", indicating an output from LINK0.

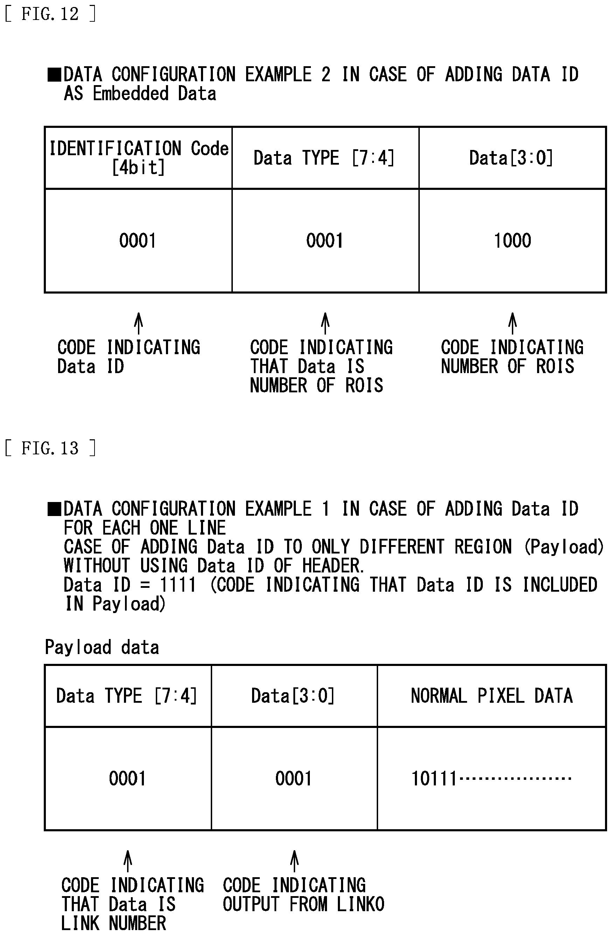

FIG. 12 illustrates a second example of the data configuration example in the case where Data ID is added to Embedded Data.

FIG. 12 illustrates a configuration example of Data ID indicating the number of ROIs, for example. In the example of FIG. 12, the value of the identification Code is "0001", indicating Data ID. In addition, the value of the Data type is "0010", indicating that Data is the number of ROIs. In addition, the value of Data is "1000", indicating the number of ROIs.

FIG. 13 to FIG. 15 illustrate a data configuration example in a case of adding Data ID for each one line.

FIG. 13 illustrates a first example of the data configuration example in a case where Data ID is added to the payload. FIG. 13 illustrates an example in a case of, without using Data ID of the header, adding Data ID to only a different region (payload). The value of Data ID of the header is set to "1111" to indicate that Data ID is included in the payload. In the example of FIG. 13, the payload includes the Data type, Data, and normal pixel data corresponding to one line. In the example of FIG. 13, the value of the Data type is "0001", indicating that Data is the LINK number. In addition, the value of Data is "0001", indicating an output from LINK0.

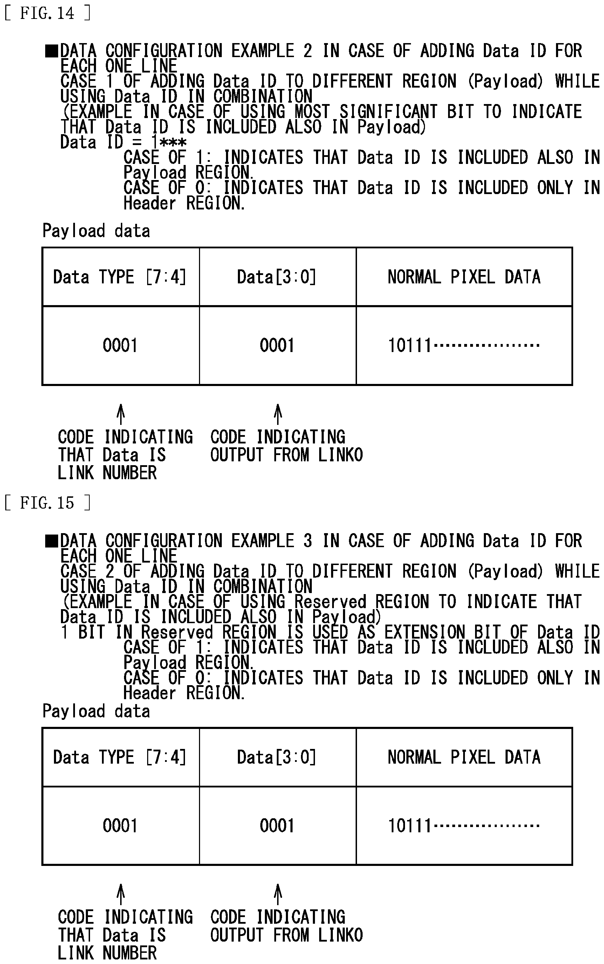

FIG. 14 illustrates a second example of the data configuration example in the case where Data ID is added to the payload. FIG. 14 illustrates a first example in a case where Data ID of the header is used in combination, and Data ID is added also to a different region (payload).

The example of FIG. 14 illustrates an example in a case of using the most significant bit of Data ID of the header to indicate that the payload also includes Data ID.

For example, Data ID of the header = 1^{∗∗∗} is set.

Case of 1: indicates that Data ID is included also in the payload region.

Case of 0: indicates that Data ID is included only in the header region.

In the example of FIG. 14, the payload includes the Data type, Data, and the normal pixel data corresponding to one line. In the example of FIG. 14, the value of the Data type is "0001", indicating that Data is the LINK number. In addition, the value of Data is "0001", indicating an output from LINK0.

FIG. 15 illustrates a third example of the data configuration example in the case where Data ID is added to the payload. FIG. 15 illustrates a second example in the case where Data ID of the header is used in combination, and Data ID is added also to a different region (payload).

In the example of FIG. 15, to indicate that the payload also includes Data ID, the Reserved region of the header is used to indicate that Data ID is included also in the payload. For example, 1 bit in the Reserved region is used as an extension bit of Data ID. For example, a case where the value of Reserved is 1 and a case where the value is 0 indicate the following.

Case of 1: indicates that Data ID is included also in the payload region.

Case of 0: indicates that Data ID is included only in the header region.

In the example of FIG. 15, the payload includes the Data type, Data, and the normal pixel data corresponding to one line. In the example of FIG. 15, the value of the Data type is "0001", indicating that Data is the LINK number. In addition, the value of Data is "0001", indicating an output from LINK0.

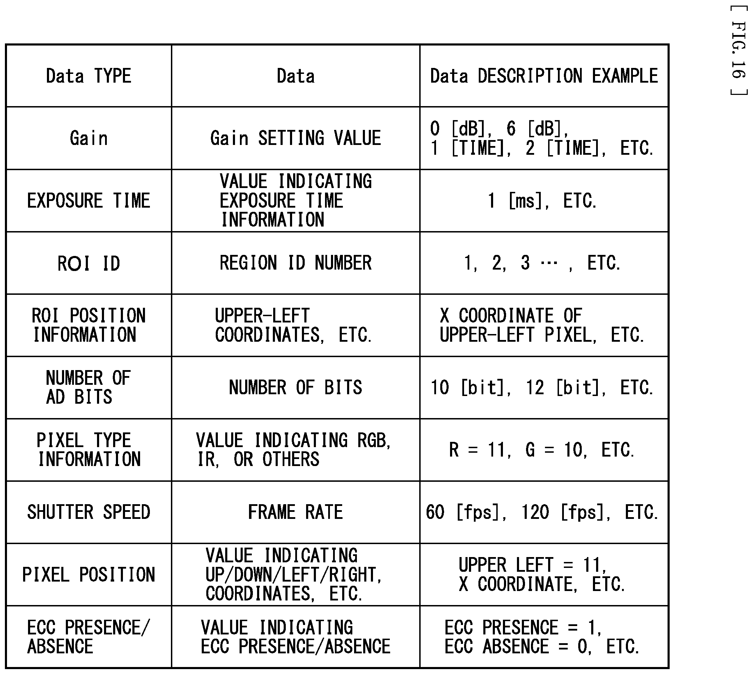

FIG. 16 illustrates specific examples of the identification information represented by Data ID.

As illustrated in FIG. 16, examples of the Data type include Gain, exposure time, an ROI ID, ROI position information, the number of AD bits, pixel type information, a shutter speed, a pixel position, ECC presence/absence, and the like.

In a case where the Data type is Gain, a Gain setting value is included as Data. A Data description example may be, for example, 0 [dB], 6 [dB], 1 [time], 2 [time], etc.

In a case where the Data type is the exposure time, a value indicating exposure time information is included as Data. The Data description example may be, for example, 1 [ms], etc.

In a case where the Data type is the ROI ID, a region ID number is included as Data. The Data description example may be, for example, 1, 2, 3 ... , etc.

In a case where the Data type is the ROI position information, upper left coordinates, etc. is included as Data. The Data description example may be, for example, an X coordinate of an upper left pixel, etc.

In a case where the Data type is the number of AD bits, the number of bits is included as Data. The Data description example may be, for example, 10 [bit], 12 [bit], etc.

In a case where the Data type is the pixel type information, a value indicating RGB, IR, or others is included as Data. The Data description example may be, for example, R = 11, G = 10, etc.

In a case where the Data type is the shutter speed, a frame rate is included as Data. The Data description example may be, for example, 60 [fps], 120 [fps], etc.

In a case where the Data type is the pixel position, a value indicating up/down/left/right, coordinates, or the like is included as Data. The Data description example may be, for example, upper left = 11, an X coordinate, etc.

In a case where the Data type is the ECC presence/absence, a value indicating the ECC presence/absence is included as Data. The Data description example may be, for example, ECC presence = 1, ECC absence = 0, etc.

### [1.3 Effects]

As described above, the improvement example of the transmission system 1 according to one embodiment makes it possible to add the identification information of the pixel data to at least a partial region of the payload. This configuration makes it possible to reliably transmit the identification information of the pixel data.

In addition, even in a case where an increase in types of pixel data, etc. makes it difficult to add the identification information to only the Data ID region of the header, the improvement example of the transmission system 1 according to one embodiment makes it possible to reliably transmit the identification information of the pixel data.

It is to be noted that the effects described in the present specification are merely examples and not limitative, and other effects may be achieved. The same applies to effects of the following other embodiments.

### <2. Other Embodiments>

The technology according to the present disclosure is not limited to the description of one embodiment described above, and various modifications may be made.

For example, the present technology may have the following configurations.

According to the present technology having the following configurations, it is possible to add the identification information of the pixel data to at least a partial region of the payload. This configuration makes it possible to reliably transmit the identification information of the pixel data.

(1) A transmission device including:
   a transmission unit configured to output, to a transmission channel, a plurality of packets each including a payload and a header added to the payload, the payload including pixel data corresponding to one line included in an image of one frame; and
   an identification information adder that adds identification information of the pixel data to at least a partial region of the payload.
(2) The transmission device according to (1), in which
   a part of the plurality of packets is a packet including a dummy region, in place of the pixel data, in the payload, and
   the identification information adder adds data indicating the identification information to the dummy region.
(3) The transmission device according to (2), in which the identification information adder adds the data indicating the identification information corresponding to a plurality of lines to the dummy region.
(4) The transmission device according to (1), in which the identification information adder adds the identification information for each one line to the partial region of the payload in each of the plurality of packets.
(5) The transmission device according to any one of (1) to (4), in which the identification information adder adds the identification information to the header and at least the partial region of the payload.
(6) The transmission device according to any one of (1) to (5), in which the identification information adder adds, to the header, information related to a region to which the identification information is added.
(7) A reception device including
   a reception unit configured to receive a plurality of packets each including a payload and a header added to the payload from a transmission unit of a transmission device via a transmission channel, the payload including pixel data corresponding to one line included in an image of one frame, in which
   the reception unit is configured to receive, from the transmission device, the packet in which identification information of the pixel data has been added to at least a partial region of the payload.
(8) A transmission system including:
   a transmission device; and
   a reception device, in which
   the transmission device includes
      a transmission unit configured to output, to a transmission channel, a plurality of packets each including a payload and a header added to the payload, the payload including pixel data corresponding to one line included in an image of one frame, and
      an identification information adder that adds identification information of the pixel data to at least a partial region of the payload.
(9) The transmission system according to (8), in which
   the reception device includes a reception unit configured to receive the plurality of packets from the transmission unit of the transmission device via the transmission channel, and
   the reception unit is configured to receive, from the transmission device, the packet in which the identification information of the pixel data has been added to at least the partial region of the payload.

This application claims the benefit of Japanese Priority Patent Application No. 2019-209579 filed with the Japan Patent Office on November 20, 2019, the entire contents of which are incorporated herein by reference.

It should be understood by those skilled in the art that various modifications, combinations, sub-combinations and alterations may occur depending on design requirements and other factors insofar as they are within the scope of the appended claims or the equivalents thereof.

## Claims

1. A transmission device comprising:
a transmission unit configured to output, to a transmission channel, a plurality of packets each including a payload and a header added to the payload, the payload including pixel data corresponding to one line included in an image of one frame; and
an identification information adder that adds identification information of the pixel data to at least a partial region of the payload.

2. The transmission device according to claim 1, wherein
a part of the plurality of packets is a packet including a dummy region, in place of the pixel data, in the payload, and
the identification information adder adds data indicating the identification information to the dummy region.

3. The transmission device according to claim 2, wherein the identification information adder adds the data indicating the identification information corresponding to a plurality of lines to the dummy region.

4. The transmission device according to claim 1, wherein the identification information adder adds the identification information for each one line to the partial region of the payload in each of the plurality of packets.

5. The transmission device according to claim 1, wherein the identification information adder adds the identification information to the header and at least the partial region of the payload.

6. The transmission device according to claim 1, wherein the identification information adder adds, to the header, information related to a region to which the identification information is added.

7. A reception device comprising
a reception unit configured to receive a plurality of packets each including a payload and a header added to the payload from a transmission unit of a transmission device via a transmission channel, the payload including pixel data corresponding to one line included in an image of one frame, wherein
the reception unit is configured to receive, from the transmission device, the packet in which identification information of the pixel data has been added to at least a partial region of the payload.

8. A transmission system comprising:
a transmission device; and
a reception device, wherein
the transmission device includes
a transmission unit configured to output, to a transmission channel, a plurality of packets each including a payload and a header added to the payload, the payload including pixel data corresponding to one line included in an image of one frame, and
an identification information adder that adds identification information of the pixel data to at least a partial region of the payload.

9. The transmission system according to claim 8, wherein
the reception device includes a reception unit configured to receive the plurality of packets from the transmission unit of the transmission device via the transmission channel, and
the reception unit is configured to receive, from the transmission device, the packet in which the identification information of the pixel data has been added to at least the partial region of the payload.
